# EUROPEAN PATENT SPECIFICATION

(11) **EP 2 543 903 B1**
(45) Date of publication and mention of the grant of the patent: **26.03.2014**
(21) Application number: 11425176.2
(22) Date of filing: 04.07.2011
(51) Int. Cl.: F16D 37/02

(54) **Mechanical combustion-engine-driven fluid pump**
Mechanische, von Verbrennungsmotor betriebene Flüssigkeitspumpe
Pompe à fluides mécanique commandée par moteur à combustion

(43) Date of publication of application: 09.01.2013
(73) Proprietor: Pierburg Pump Technology Italy S.p.A., 66034 Lanciano (IT)
(72) Inventor: Squarcini, Raffaele, 57123 Livorno (IT); Bartalesi, Elisa, 53034 Colle di Val d'Elsa (IT); Armenio, Giacomo, 57128 Livorno (IT); Forte, Paola, 56123 Pisa (IT); Frendo, Francesco, 55049 Viareggio (IT); Rizzo, Rocco, 56123 Pisa (IT); Bucchi, Francesco, 56023 Cascina (IT); Ferri, Andrea, 58022 Follonica (IT)
(74) Representative: Eberlein, Jasper

(56) References cited:
- FR-A- 1 439 447
- GB-A- 708 557
- US-A1- 2009 266 666

## Description

The invention refers to a mechanical combustion-engine-driven fluid pump which is driven by an internal combustion engine and is providing a liquid, pressurized gas or vacuum to an automotive unit.

The fluid pump can be a lubricant pump, a coolant pump, a vacuum pump or a pump providing pressurized gas, for example pressurized air. The mechanical fluid pump is not to driven by an electrical rotor but is directly coupled to the combustion engine. As a consequence, the rotational speed of the fluid pump is proportional to the rotational speed of the combustion engine so that the fluid pump is always rotating even if there is no need for fluid supply or for a suction activity to create a vacuum.

In US 2009/0266666 A1 a magneto-rheological clutch for the transmission of rotational energy between an engine and wheels of a lawn-mower is disclosed.

In US 7 422 093 B2 a fluid pump for providing a pressurized liquid for a hydraulic power steering is described. The fluid pump is provided with a magneto-rheological clutch so that the pump performance can be controlled depending on the fluid demand and pressure demand of the power steering. The magnetic field for increasing the viscosity of the magneto-rheological fluid is provided by an electromagnetic coil. If the electromagnetic coil fails, the magneto-rheological clutch can not be engaged so that the fluid pump does not work. This risk of failure is not acceptable for vital fluid pumps, such as a lubricant pump, a coolant pump or a vacuum pump for a brake assistance system.

It is an object of the invention to provide a failsafe mechanical combustion-engine-driven fluid pump with a magneto-rheological clutch.

This object is solved with the features of claim 1.

The fluid pump according to the invention is provided with an input shaft which is directly driven by the combustion engine and with a pumping unit with a pump rotor for pumping the fluid which is a liquid or a gas. The term "directly driven" means that there is no clutch between the rotational element of the engine and the input shaft of the pump. The input shaft of the pump can be driven by the engine via a belt, gear wheels or by direct coupling with the camshaft or the crankshaft of the engine. The magneto-rheological clutch is provided between the input shaft and the pump rotor and comprises a fluid gap between two clutch bodies. One clutch body is directly connected to the input shaft and the other clutch body is directly connected to the pump rotor. The fluid gap between the two clutch bodies is filled with a magneto-rheological fluid.

The magnetic field for increasing the viscosity of the magneto-rheological fluid is not generated by an electromagnetic means but is generated by a permanent magnet element which is shiftable between a disengaged position in which the magnet element's magnetic field penetration flux in the gap is low and an engaged position in which the magnetic field flux penetration in the gap is high. In its engaged position, the permanent magnet is close to the gap, and in the disengaged position, the permanent magnet is more distant from the gap. The magnet element is moved between the engaged and the disengaged position by a separate magnet element actuator.

Since the magnetic field for penetrating the gap and the magneto-rheological fluid in the gap is not generated by an electromagnet, the magneto-rheological clutch can generally also be engaged if the electric control of the pump fails.

According to a preferred embodiment of the invention, the permanent magnet element is pretensioned by a passive pretension element into its engaged position. If the actuator fails, the pretension element pushes the permanent magnet element into the engaged position. This arrangement makes the clutch concept totally failsafe. The passive pretension element can be, for example, a spring or another permanent magnet. However, the passive pretension element does not need any external energy to provide the pretension force.

According to a preferred embodiment of the invention, the clutch bodies are cup-shaped and form a cup-shaped gap between them. The permanent magnet is in its engaged position positioned inside the ring-like shaped cavity defined by the cup-shaped gap. Since the gap between the two clutch bodies is not only disk-shaped but also comprises a cylindrical portion, the total gap surface area is significantly increased to transmit high torque values without increasing the total diameter of the clutch.

Preferably, the actuator can be provided as a vacuum actuator. The vacuum actuator is magnetically neutral and does not generate any electromagnetic field which could penetrate the clutch gap filled with the magneto-rheological fluid.

Alternatively, the actuator is an electromagnetic actuator in form of an electromagnetic coil. If the electromagnetic actuator is activated, the shiftable permanent magnet element is pulled or pushed into its disengaged position, i.e. distant from the clutch gap. Preferably, the permanent magnet element is magnetized in axial direction and is axially shiftable.

One embodiment of the invention is described by referring to the drawings, wherein
figure 1 shows a mechanical combustion-engine-driven fluid pump in longitudinal cross-section in the engaged state, and
figure 2 shows the fluid pump of figure 1 in the disengaged state.

The figures show a typical automotive arrangement consisting of an internal combustion engine 12, a mechanical fluid pump 10 directly driven by the combustion engine 12 and a vacuum-driven brake assistance unit 14. The fluidic pump 10 is designed as a vacuum pump 10 and provides low pressure to the pneumatic brake assistance unit 14.

The combustion engine 12 is mechanically directly connected to an input shaft 20 of a clutch 16 of the vacuum pump 10 so that the input shaft 20 is always rotating with a rotational speed being directly proportional to the rotational speed of the combustion engine 12.

The clutch 16 is arranged between the input shaft 20 and an output shaft 21 and is a magneto-rheological clutch 16. The clutch 16 connects the input shaft 20 with the output shaft 21 in the engaged clutch state and disconnects the output shaft 21 from the input shaft 20 in the disengaged state. The clutch 16 is provided with two clutch bodies 22,24 defining a fluid gap 26 therebetween filled with a magneto-rheological fluid, an axially shiftable permanent magnet element 30, a pretension element 44 designed as a spring and an electromagnetic actuator 42 designed as a ring coil 43.

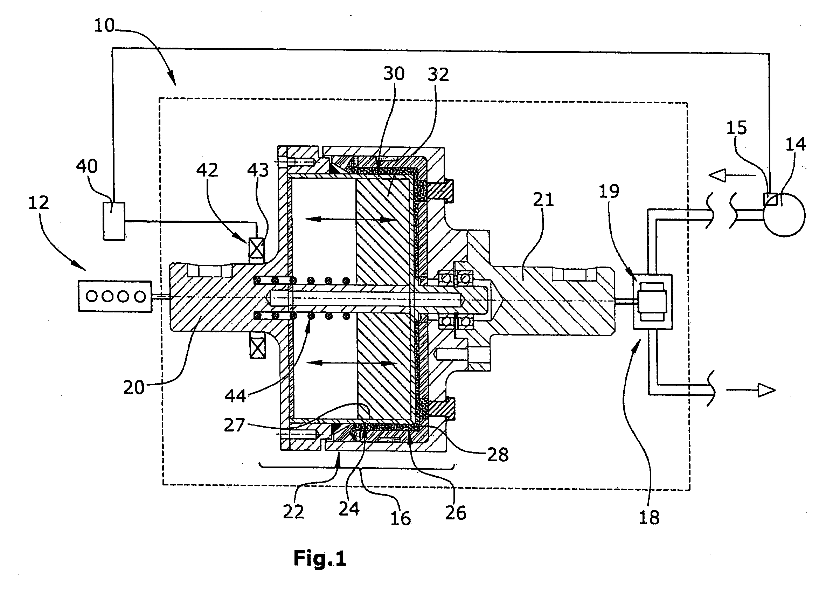

The clutch bodies 22,24 are both cup-shaped so that they define a small cup-shaped gap 26 between them which has a disk-ring-shaped portion and a cylindrical portion. The permanent magnet element 30 is defined as a circular magnet ring body 32 which is axially shiftable and co-rotates with the input-shaft-sided clutch body 24. The magnet ring body 32 is positioned inside of the cup-shaped cavity 27 defined by the cup-shaped gap 26 in the engaged position of the permanent magnet element 30 which is shown in figure 1. In this engaged position, the permanent magnet body 32 is close to both portions of the fluid gap 26 containing the magneto-rheological fluid 28 therein so that the magnetic field generated by the permanent magnet element 30 penetrates the magneto-rheological fluid 28 inside the fluidic gap 26 with a maximum magnetic flux.

The axially shiftable permanent magnet element 30 is pretensioned by the pretension element 44 into its engaged position as shown in figure 1. This arrangement makes the clutch 16 failsafe because the permanent magnet element 30 is always pushed into its engaged position if the actuator 42. should fail. The actuator 42 is, in the present embodiment, an electromagnetic ring coil 43 which axially attracts the permanent magnet element 30 if the ring coil 43 is electrically activated.

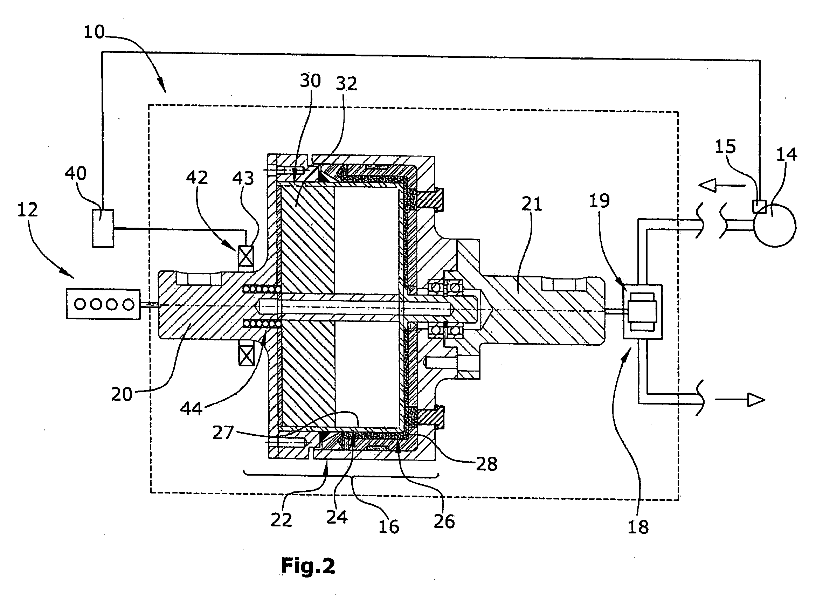

The electromagnetic actuator 42 is controlled by a control unit 40 which is also connected to a pressure sensor 15 of the brake assistance unit 14 via a signal line. The control unit 40 engages and disengages the clutch 16 dependent on the pneumatic pressure in the working chamber of the pneumatic brake assistance unit 14. As long as the pneumatic pressure in the working chamber of the brake assistance unit 14 is below a critical value, the clutch 16 remains disengaged by continuously energizing the electromagnetic actuator 42 so that the shiftable magnet element 30 is pulled into and hold in its disengaged position, as shown in figure 2. In the disengaged position of the permanent magnet element 30 the magnetic field penetrating the fluid gap 26 has a relatively low flux so that the viscosity of the magneto-rheological fluid is relatively low. As a consequence, the clutch slip is high so that the clutch is more or less disengaged.

As soon as the pneumatic pressure in the working chamber of the brake assistance unit 14 exceeds the critical pressure value, the clutch 16 is switched into the engaged state by not energizing the electromagnetic actuator 42 so that the shiftable magnet element 30 is pushed into its engaged position by the pretension element 44, as shown in figure 1. In this state the magnetic field flux penetrating the fluid gap 26 is relatively strong so that the viscosity of the magneto-rheological fluid is relatively high. As a consequence, the clutch slip is low so that the clutch is more or less engaged. In this engaged state, the output shaft 21 rotates with the same rotational speed as the input shaft 20. The output shaft 21 drives the pump rotor 19 of the pumping unit 18 so that the working chamber of the brake assistance unit 14 is evacuated until the pneumatic pressure in the working chamber falls below the critical pressure value.

## Claims

1. Mechanical combustion-engine-driven fluid pump (10) comprising an input shaft (20) which is directly drivable by the combustion engine (12),
a pumping unit (18) with a pump rotor (19), and
a clutch (16) between the input shaft (20) and the pump rotor (19), whereby
the clutch (16) is a magneto-rheological clutch (16) comprising a fluid gap (26) between two clutch bodies (22, 24) **characterised in that** the clutch further comprises a shiftable permanent magnet element (30), the fluid gap (26) being filled with a magneto-rheological fluid (28), wherein
the permanent magnet element (30) is shiftable between an engaged position wherein the permanent magnet elemerit's magnetic field penetrates the gap (26) with high magnetic flux and a disengaged position wherein the magnet element's magnetic field penetration flux is less than in the engaged position, and
an actuator (42) is provided for moving the permanent magnet element (30) between its engaged and its disengaged position.

2. Mechanical combustion-engine-driven fluid pump (10) of claim 1, whereby the permanent magnet element (30) is shiftable in axial direction.

3. Mechanical combustion-engine-driven fluid pump (10) of one of the preceding claims, whereby the clutch bodies (22,24) are cup-shaped and form a cup-shaped gap (26) between them, and the permanent
magnet element (30) in its engaged position is positioned inside of the cup-shaped cavity (27) defined by the cup-shaped gap (26).

4. Mechanical combustion-engine-driven fluid pump (10) of one of the preceding claims, whereby the permanent magnet element (30) is pretensioned by a passive pretension element (44) into the engaged position.

5. Mechanical combustion-engine-driven fluid pump (10) of one of the preceding claims, whereby the actuator (42) is an electromagnetic actuator.

6. Mechanical combustion-engine-driven fluid pump (10) of one of claims 1-4, whereby the actuator is a vacuum actuator.

## Patentansprüche

1. Mechanische, von einem Verbrennungsmotor getriebene Fluidpumpe (10) mit
einer Antriebswelle (20), welche unmittelbar von dem Verbrennungsmotor (12) antreibbar ist,
einer Pumpeinheit (18) mit einem Pumpenrotor (19), und
einer Kupplung (16) zwischen der Antriebswelle (20) und dem Pumpenrotor (19),
wobei die Kupplung (16) eine magnetorheologische Kupplung (16) mit einem Fluidspalt (26) zwischen zwei Kupplungskörpern (22, 24) ist,
**dadurch gekennzeichnet, dass** die Kupplung ferner ein verschiebbares Permanentmagnetelement (30) aufweist, wobei der Fluidspalt (26) mit einem magnetorheologischen Fluid (28) gefüllt ist, wobei
das Permanentmagnetelement (30) zwischen einer Eingriffsposition, in welcher das Magnetfeld des Permanentmagnetelements den Spalt (26) mit einem starken Magnetfluss durchdringt, und einer Löseposition verschiebbar ist, in welcher der Penetrationsfluss des Magnetfelds des Magnetelements schwächer als in der Eingriffsposition ist, und
ein Aktuator (42) zum Bewegen des Permanentmagnetelements (30) zwischen der Eingriffs und der Löseposition vorgesehen ist.

2. Mechanische, von einem Verbrennungsmotor getriebene Fluidpumpe (10) nach Anspruch 1, bei welcher das Permanentmagnetelement (30) in axialer Richtung verschiebbar ist.

3. Mechanische, von einem Verbrennungsmotor getriebene Fluidpumpe (10) nach einem der vorhergehenden Ansprüche, bei welcher die Kupplungskörper (22, 24) becherförmig sind und einen becherförmigen Spalt (26) zwischen einander bilden, und wobei das Permanentmagnetelement (30) in seiner Eingriffsposition in dem durch den becherförmigen Spalt (26) gebildeten becherförmigen Hohlraum (27) angeordnet ist.

4. Mechanische, von einem Verbrennungsmotor getriebene Fluidpumpe (10) nach einem der vorhergehenden Ansprüche, bei welcher das Permanentmagnetelement (30) durch ein passives Vorspannelement (44) in die Eingriffsposition vorgespannt ist.

5. Mechanische, von einem Verbrennungsmotor getriebene Fluidpumpe (10) nach einem der vorhergehenden Ansprüche, bei welcher der Aktuator (42) ein elektromagnetischer Aktuator ist.

6. Mechanische, von einem Verbrennungsmotor getriebene Fluidpumpe (10) nach einem der Ansprüche 1-4, bei welcher der Aktuator ein Vakuum-Aktuator ist.

## Revendications

1. Pompe à fluides (10) mécanique commandée par moteur à combustion, comprenant
un arbre d'entrée (20) apte à être entrainé directement par le moteur à combustion (12),
une unité de pompage (18) avec un rotor de pompe (19), et
un embrayage (18) entre ledit arbre d'entrée (20) et ledit rotor de pompe (19),
ledit embrayage (16) étant un embrayage magnéto-rhéologique (16) avec une fente pour fluide (26) entre deux corps d'embrayage (22, 24),
**caractérisée en ce que** ledit embrayage comprend en outre un élément d'aimant permanent (30) déplaçable, ladite fente pour fluide (26) étant remplie par un fluide magnéto-rhéologique (28),
ledit élément d'aimant permanent (30) étant déplaçable entre une position engagée, dans laquelle le champ magnétique dudit élément d'aimant permanent (30) pénètre la fente (26) avec un flux fort, et une position dégagée, dans laquelle le flux pénétrant du champ magnétique dudit élément d'aimant est plus faible que dans la position engagée, et
un actionneur (42) est prévu pour déplacer ledit élément d'aimant permanent (30) entre sa position engagée et sa position dégagée.

2. Pompe à fluides (10) mécanique commandée par moteur à combustion selon la revendication 1, dans laquelle ledit élément d'aimant permanent (30) est déplaçable selon la direction axiale.

3. Pompe à fluides (10) mécanique commandée par moteur à combustion selon l'une quelconque des revendications précédentes, dans laquelle les corps d'embrayage (22, 24) sont en forme de coupe et forment entre eux une fente (26) en forme de coupe, et ledit élément d'aimant permanent (30), dans sa position engagée, est positionné dans la cavité (27) en forme de coupe définie par ladite fente (26) en forme de coupe.

4. Pompe à fluides (10) mécanique commandée par moteur à combustion selon l'une quelconque des revendications précédentes, dans laquelle ledit élément d'aimant permanent (30) est précontraint dans la position engagée par un élément de précontraint passif (44).

5. Pompe à fluides (10) mécanique commandée par moteur à combustion selon l'une quelconque des revendications précédentes, dans laquelle l'actionneur (42) est un actionneur électromagnétique.

6. Pompe à fluides (10) mécanique commandée par moteur à combustion selon l'une quelconque des revendications 1 - 4, dans laquelle ledit actionneur est un actionneur à vide.
